# EUROPÄISCHE PATENTSCHRIFT

(11) **EP 4 077 132 B1**
(45) Veröffentlichungstag und Bekanntmachung des Hinweises auf die Patenterteilung: **20.08.2025**
(21) Anmeldenummer: 20838472.7
(22) Anmeldetag: 18.12.2020
(51) Int. Cl.: B64D 11/00, B64D 11/06

(54) **FLUGZEUGSITZVORRICHTUNG MIT EINER HALTEVORRICHTUNG FÜR EINEN GEGENSTAND**
VEHICLE SEAT APPARATUS HAVING A HOLDING APPARATUS FOR AN OBJECT
DISPOSITIF DE SIÈGE D'AÉRONEF COMPRENANT UN DISPOSITIF DE RETENUE POUR UN OBJET

(30) Priorität: 20.12.2019 DE 102019135593
(43) Veröffentlichungstag der Anmeldung: 26.10.2022
(73) Patentinhaber: Recaro Aircraft Seating GmbH & Co. KG, 74523 Schwäbisch Hall (DE)
(72) Erfinder: LAKEIT, Stefan, 97953 Königheim (DE); BILLION, Julien, 71522 Backnang (DE)
(74) Vertreter: Daub, Thomas
(86) Internationale Anmeldenummer: PCT/EP2020/087252
(87) Internationale Veröffentlichungsnummer: WO 2021/123330

(56) Entgegenhaltungen:
- EP-A1- 2 746 158
- EP-A1- 3 339 173
- WO-A1-2020/263262
- US-A- 3 615 118
- US-B2- 9 045 096

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einer Rückenlehne und mit einer in einen oberen Bereich der Rückenlehne integrierten Funktionseinheit, wie insbesondere eine Bildschirmeinheit oder eine Literaturtasche, und mit einer Haltevorrichtung, die dazu vorgesehen ist, dass zumindest ein Gegenstand in dem oberen Bereich der Rückenlehne angeordnet werden kann, vorgeschlagen worden.

Die Druckschrift EP 2 746 158 A1 offenbart eine Flugzeugsitzvorrichtung mit einer Rückenlehne und einer in der Rückenlehne integrierten Funktionseinheit in Form einer Literaturtasche, die in einem mittleren Bereich der Rückenlehne angeordnet ist und mit einer als PED-Halter ausgebildeten Haltevorrichtung, die ebenfalls in einem mittleren Bereich der Rückenlehne angeordnet ist.

Die Druckschrift EP 3 339 173 A1 offenbart eine Flugzeugsitzvorrichtung mit einer Funktionseinheit, die als Tisch oder Bedienpanel ausgebildet ist, die in einen mittleren Bereich der Rückenlehne angeordnet ist und nicht in einem oberen Bereich, der von einem oberen Viertel der Rückenlehne gebildet ist. Ferner weist die Druckschrift einen Bildschirm auf, der fest oberhalb der als Tisch ausgebildeten Funktionseinheit angeordnet ist.

Die Druckschrift US 9,045,096 B2 offenbart eine Rückenlehne und eine an der Rückenlehne angeordnete Funktionseinheit, die als ein Tisch ausgebildet und in einem mittleren Bereich der Rückenlehne angeordnet ist.

Die Druckschrift US 3, 615, 118 A offenbart eine Rückenlehne mit einer Funktionseinheit, die als ein Verstaufach ausgebildet ist. Die Druckschrift offenbart jedoch keine Halteeinheit, die als PED-Halter ausgebildet ist und oberhalb der Funktionseinheit angeordnet ist.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einer Rückenlehne und mit einer in einen oberen Bereich der Rückenlehne integrierten Funktionseinheit, wie insbesondere eine Bildschirmeinheit oder eine Literaturtasche, wobei der obere Bereich von einem oberen Viertel der Rückenlehne gebildet ist, und mit einer Haltevorrichtung, die dazu vorgesehen ist, dass zumindest ein Gegenstand in dem oberen Bereich der Rückenlehne angeordnet werden kann.

Die Haltevorrichtung ist als ein PED-Halter ausgebildet und das Halteelement der Haltevorrichtung ist in der Verstaustellung in dem Bereich oberhalb der integrierten Funktionseinheit verstaut angeordnet. Unter einer "Flugzeugsitzvorrichtung" soll vorzugsweise eine Vorrichtung verstanden werden, die zumindest einen Teil eines Flugzeugsitzes ausbildet, der dazu vorgesehen ist, in einem Flugzeug aufgeständert zu werden. Der Flugzeugsitz kann vorzugsweise als Teil einer Flugzeugsitzreihe aus zumindest zwei nebeneinander aufgeständerten Flugzeugsitzen ausgebildet sein. Grundsätzlich ist es auch denkbar, dass der Flugzeugsitz als ein Einzelsitz ausgebildet ist. Unter einer "Funktionseinheit" soll vorzugsweise eine Einheit verstanden werden, die zur Benutzung durch einen Passagier, vorzugsweise während eines Fluges vorgesehen ist. Eine Funktionseinheit ist beispielsweise als eine Bildschirmeinheit oder eine Literaturtasche ausgebildet. Unter einer "Bildschirmeinheit" soll vorzugsweise eine Einheit aus einem Bildschirm verstanden werden, der vorzugsweise zur Anzeige eines Entertainmentsystems für einen Passagier vorgesehen ist. Unter einer "Literaturtasche" soll vorzugsweise eine Einheit verstanden werden, die einen Aufbewahrungsraum ausbildet, in dem während eines Betriebs, beispielsweise während eines Fluges, Literatur, wie beispielsweise Prospekte und/oder Sicherheitsanweisungen, oder ein PED verliersicher verstaubar sind. Unter einem "oberen Bereich der Rückenlehne" soll vorzugsweise ein einer Aufständerebene, auf welcher der Flugzeugsitz aufgeständert ist, abgewandter Bereich der Rückenlehne des Flugzeugsitzes verstanden werden. Vorzugsweise ist der obere Bereich von einem oberen Drittel, bevorzugt von einem oberen Viertel, der Rückenlehne gebildet. Vorzugsweise erstreckt sich der obere Bereich der Rückenlehne von einer oberen Kante bis 30 cm unterhalb der oberen Kante. Unter "integriert" soll vorzugsweise eingebaut oder angeordnet verstanden werden. Vorzugsweise ist beispielsweise eine als Bildschirmeinheit ausgebildete Funktionseinheit in einem oberen Bereich der Rückenlehne angebunden, vorzugsweise beweglich befestigt. Eine als Literaturtasche ausgebildete Funktionseinheit kann ebenfalls in dem oberen Bereich der Rückenlehne montiert sein, oder auch teilweise einstückig mit der Rückenlehne ausgebildet sein. Unter einer "Haltevorrichtung" soll vorzugsweise eine Vorrichtung verstanden werden, die zum Befestigen, Halten, und/oder Verstauen eines Gegenstandes vorgesehen ist. Vorzugsweise kann mittels der Haltevorrichtung ein Gegenstand, wie beispielsweise ein Tablet, ein Handy, ein Buch, eine Getränkegefäß oder eine Zeitschrift, verliersicher und vorzugsweise bedien- und/oder lesbar gehalten und an der Rückenlehne angeordnet werden. Unter "zumindest im Wesentlichen oberhalb angeordnet" soll vorzugsweise verstanden werden, dass zumindest ein Großteil eines Elements, vorzugsweise der Haltevorrichtung, wie insbesondere ein Aufbewahrungsbereich, oder ein Haltebereich oberhalb eines Elements, und zwar vorzugsweise oberhalb des Funktionselements angeordnet ist. Vorzugsweise ist ein überwiegender Teil des Halteelements oberhalb eines unteren Endes der Funktionseinheit und besonderes bevorzugt oberhalb eines oberen Endes der Funktionseinheit angeordnet. Unter "vorgesehen" soll vorzugsweise speziell ausgelegt und/oder ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt. Dadurch kann eine erfindungsgemäße Rückenlehne eines Flugzeugsitzes besonders vorteilhaft ausgestaltet werden und zuvor im Stand der Technik nicht genutzte Bereiche vorteilhaft zur Erhöhung eines Komforts eines Passagiers genutzt werden.

Zudem wird vorgeschlagen, dass die Haltevorrichtung zumindest teilweise in dem oberen Bereich zwischen der Funktionseinheit und einer oberen Kante der Rückenlehne integriert ist. Vorzugsweise ist die Haltevorrichtung direkt unterhalb der Kante der Rückenlehne unmittelbar unterhalb einer Anbringung für einen Bezug der Rückenlehne angeordnet. Dadurch kann die Haltevorrichtung besonders vorteilhaft in die Rückenlehne integriert werden.

Weiter wird vorgeschlagen, dass die Haltevorrichtung zumindest teilweise in eine Oberseite der Rückenlehne integriert ist. Unter einer "Oberseite der Rückenlehne" soll vorzugsweise eine Fläche verstanden werden, die die Rückenlehne nach oben hin abschließt. Die Oberseite der Rückenlehne kann dabei eben verlaufen oder eine Kontur ausbilden. Unter "in die Oberseite zumindest teilweise integriert" soll vorzugsweise verstanden werden, dass eine Vorrichtung oder ein Element, vorzugsweise die Haltevorrichtung, zu einem Teil in der Oberseite angeordnet ist oder einstückig mit der Oberseite ausgebildet ist. Dadurch kann die Haltevorrichtung besonders vorteilhaft angeordnet werden.

Unter einer "Verstaustellung" soll vorzugsweise eine Stellung der Haltevorrichtung verstanden werden, in der die Haltevorrichtung möglichst platzsparend angeordnet ist und nicht genutzt werden kann. In der Verstaustellung ist die Haltevorrichtung vorzugsweise so an der Rückenlehne angeordnet, dass von der Haltevorrichtung kein Element in der vorgesehenen Weise gehalten werden kann. Dadurch kann die Haltevorrichtung besonders vorteilhaft verstaut werden.

Es wird weiterhin vorgeschlagen, dass die Funktionseinheit als eine Bildschirmeinheit ausgebildet ist. Unter einer "Bildschirmeinheit" soll vorzugsweise eine Einheit aus einem Bildschirm verstanden werden. Ein Bildschirm ist vorzugsweise als ein Display ausgebildet, wie beispielsweise ein TFT oder OLED-Display. Dadurch kann die Funktionseinheit besonders vorteilhaft ausgebildet werden.

Des Weiteren wird vorgeschlagen, dass die Rückenlehne einen Aufnahmebereich aufweist, in dem die Haltevorrichtung in der Verstaustellung zumindest teilweise angeordnet ist. Unter einem "Aufnahmebereich" soll vorzugsweise ein Bereich verstanden werden, der dazu vorgesehen, vorzugsweise entsprechend ausgeformt ist, dass die Haltevorrichtung in ihrer Verstaustellung zumindest zu einem Teil darin angeordnet werden kann. Dadurch kann die Haltevorrichtung in ihrer Verstaustellung besonders vorteilhaft angeordnet werden.

Weiterhin wird vorgeschlagen, dass der Aufnahmebereich als eine Vertiefung ausgebildet ist, in der die Haltevorrichtung in der Verstaustellung eingelassen ist und insbesondere eben mit einer Außenfläche der Rückenlehne abschließt. Dadurch kann die Haltevorrichtung besonders vorteilhaft verstaut werden und insbesondere von der Rückenlehne abstehende Kanten in der Verstaustellung der Haltevorrichtung verhindert werden.

Außerdem wird vorgeschlagen, dass die Haltevorrichtung um eine unterhalb des Aufnahmebereichs angeordnete Drehachse schwenkbar an der Rückenlehne gelagert ist. Unter "unterhalb" soll vorzugsweise insbesondere in Richtung der Aufständerebene verstanden werden. Unter "schwenkbar gelagert" soll vorzugsweise um eine Drehachse zentrisch oder exzentrisch drehbar gelagert verstanden werden, wobei das schwenkbare Element, also die Haltevorrichtung, um einen definierten Schwenkwinkel verschwenkt werden kann. Dadurch kann die Haltevorrichtung besonders vorteilhaft an die Rückenlehne angebunden werden.

Es wird weiter vorgeschlagen, dass die Haltevorrichtung zumindest einen Haltearm ausbildet, über den die Haltevorrichtung mit der Rückenlehne gekoppelt ist. Unter einem "Haltearm" soll vorzugsweise ein längliches Element verstanden werden, das mit der Rückenlehne verschwenkbar verbunden ist und an dem ein Halteelement der Haltevorrichtung angebunden ist. Dadurch kann die Haltevorrichtung besonders vorteilhaft an die Rückenlehne angebunden werden.

Erfindungsgemäß ist die Haltevorrichtung als ein PED-Halter ausgebildet. Unter einem "PED-Halter" soll vorzugsweise ein Halter für ein Personal Electronic Device verstanden werden, über den ein PED verliersicher und in einer für einen Passagier benutzbaren Position gehalten wird. Vorzugsweise weist der PED-Halter ein Halteelement auf, das eine Tiefe aufweist, die geringer ist als 10 cm. Der PED-Halter ist nicht als ein Tisch ausgebildet. Unter einem "PED" soll vorzugsweise ein Tablet-Computer, oder ein Smartphone verstanden werden. Dadurch kann die Haltevorrichtung besonders vorteilhaft ausgebildet werden.

Ferner wird vorgeschlagen, dass die Haltevorrichtung eine Verrastungseinheit aufweist, mittels der die Haltevorrichtung in einer Verstaustellung an der Rückenlehne fixierbar ist. Unter einer "Verrastungseinheit" soll vorzugsweise eine Einheit verstanden werden, die dazu vorgesehen ist, zwei Elemente, beispielsweise die Haltevorrichtung und die Rückenlehne, zumindest in einem Verriegelungszustand fest zueinander zu fixieren, vorzugsweise durch eine kraft- und/oder formschlüssige Verbindung. Die Verrastungseinheit ist vorzugsweise durch einen Passagier händisch bedienbar und von einem Verrastungszustand in einen Freigabezustand und umgekehrt überführbar. Dadurch kann die Haltevorrichtung besonders vorteilhaft in der Verstaustellung arretiert werden.

Es wird weiterhin vorgeschlagen, dass die Haltevorrichtung zur Lagerung an der Rückenlehne zumindest ein Drehlager, ein Linearlager und/oder ein Teleskoplager umfasst. Vorzugsweise weist die Haltevorrichtung je Haltearm jeweils ein Drehlager auf. Vorzugsweise ist beispielsweise auch denkbar, dass die Haltevorrichtung eine Kombination von unterschiedlichen Dreh-, Linear- und Teleskoplagern aufweist, durch die ein Halteelement der Haltevorrichtung in unterschiedlichen Bewegungsrichtungen relativ zu der Rückenlehne bewegt werden kann. Dadurch kann die Haltevorrichtung besonders vorteilhaft ausgebildet werden und besonders vorteilhaft relativ zu der Rückenlehne verstellt werden.

Des Weiteren wird vorgeschlagen, dass die Haltevorrichtung dazu vorgesehen ist, in unterschiedlichen Gebrauchsstellungen arretiert zu werden. Vorzugsweise ist die Haltevorrichtung dazu vorgesehen, relativ zu der Rückenlehne in verschiedenen Gebrauchsstellungen arretiert, also fixiert zu werden, sodass gehaltene Elemente in unterschiedlichen Stellungen zu einem Passagier festgestellt werden können. Dadurch kann die Haltevorrichtung besonderes variabel ausgebildet werden und gehaltene Elemente vorzugsweise in einer für den entsprechende Passagier passenden Position gehalten werden, wodurch insbesondere ein Komfort erhöht werden kann.

Nicht mehr erfindungsgemäß wird vorgeschlagen, dass die Haltevorrichtung als ein in die Oberseite der Rückenlehne oder in eine Rückseite der Rückenlehne oberhalb der integrierten Funktionseinheit integriertes Staufach ausgebildet ist. Unter einem "Staufach" soll insbesondere ein Aufbewahrungsraum für Utensilien, vorzugsweise kleinere Utensilien verstanden werden, der vorzugsweise durch ein Abdeckelement, wie vorzugsweise ein Deckel, verschließbar ist. Grundsätzlich ist es auch denkbar, dass das Staufach nicht verschließbar ausgebildet ist. Dadurch kann die Haltevorrichtung vorteilhaft zur Aufbewahrung von kleinen Utensilien in einem sonst ungenutzten Bereich der Rückenlehne ausgebildet werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer Flugzeugsitzvorrichtung in einem ersten Ausführungsbeispiel mit einer Haltevorrichtung in einer Verstaustellung,
- Fig. 2: eine weitere Ansicht der Haltevorrichtung in einer Verstaustellung,
- Fig. 3: eine schematische Darstellung der Haltevorrichtung in einer Gebrauchsstellung mit einem gehaltenen PED,
- Fig. 4: eine weitere schematische Darstellung der Haltevorrichtung in einer Gebrauchsstellung mit einem gehaltenen PED,
- Fig. 5: eine schematische Ansicht einer Flugzeugsitzvorrichtung in einem zweiten Ausführungsbeispiel mit einer Haltevorrichtung in einer Gebrauchsstellung,
- Fig. 6: eine schematische Detailansicht der Haltevorrichtung in dem zweiten Ausführungsbeispiel,
- Fig. 7: eine schematische Darstellung einer nicht mehr erfindungsgemäßen Flugzeugsitzvorrichtung in einem dritten Ausführungsbeispiel mit einer Haltevorrichtung, die als Staufach ausgebildet ist,
- Fig. 8: eine weitere schematische Darstellung der als Staufach ausgebildeten Haltevorrichtung und
- Fig. 9: eine schematische Ansicht einer Flugzeugsitzvorrichtung in einem vierten Ausführungsbeispiel mit einer Haltevorrichtung in einer Gebrauchsstellung.

### Beschreibung der Ausführungsbeispiele

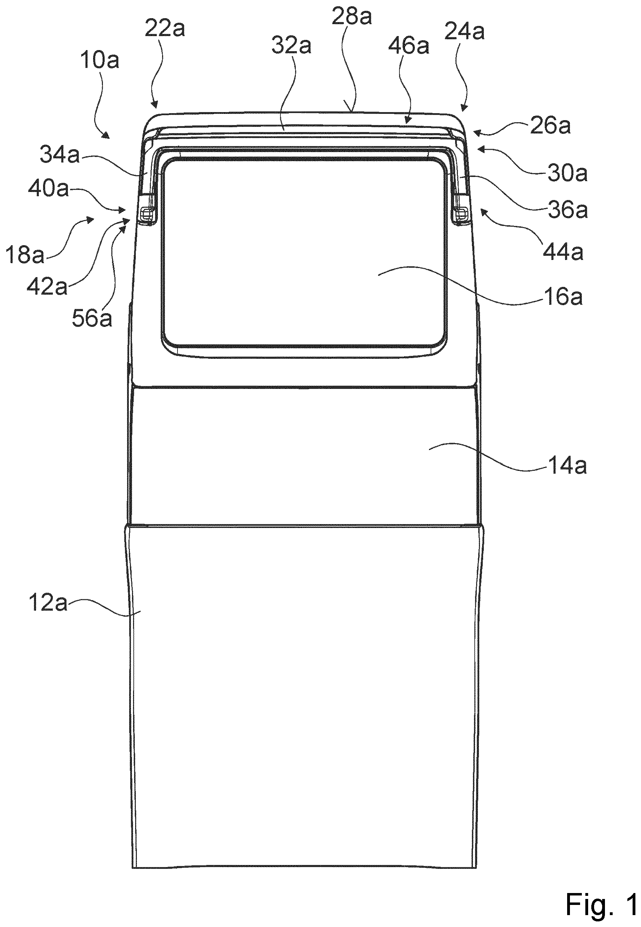

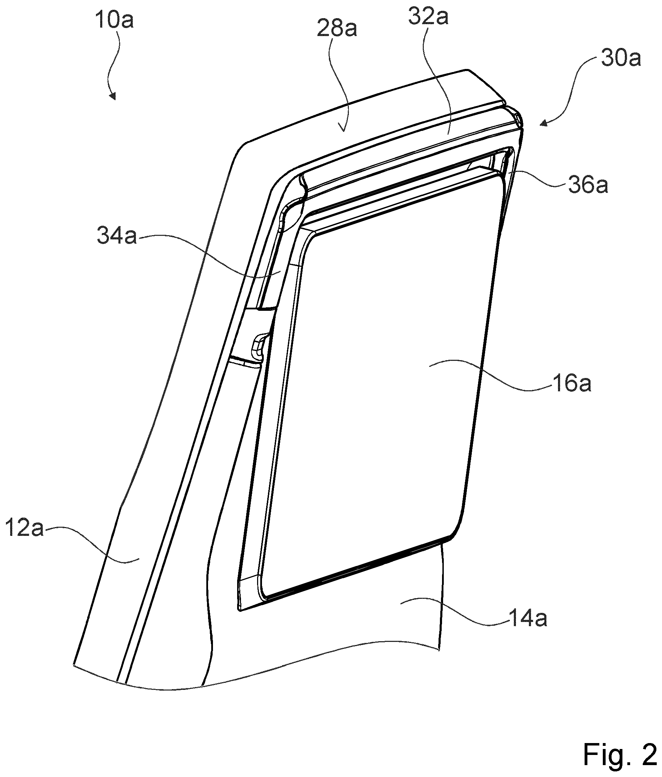

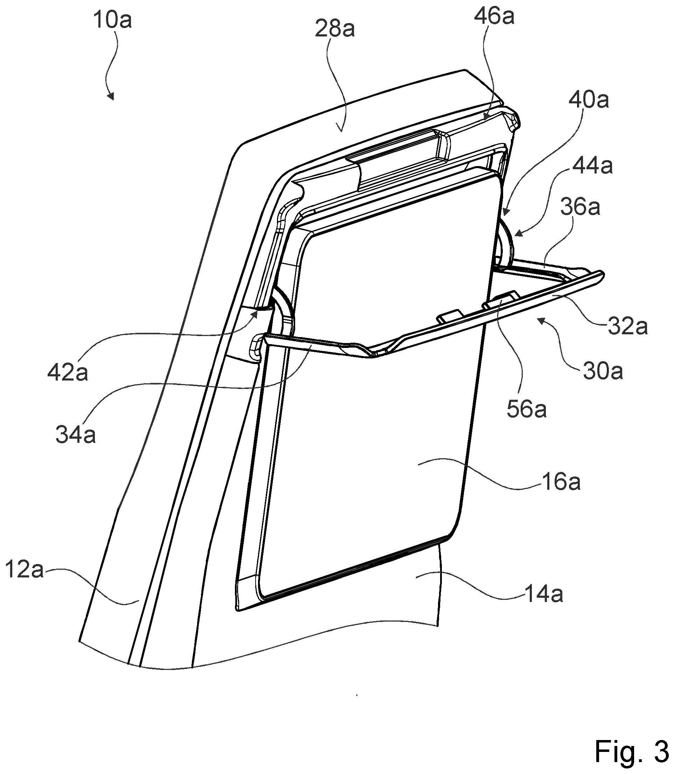

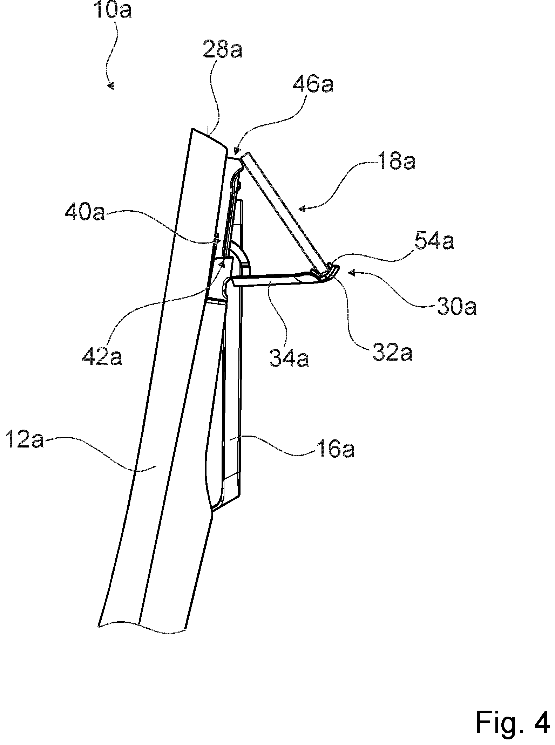

In den Figuren 1 bis 4 ist ein erstes Ausführungsbeispiel der Flugzeugsitzvorrichtung gezeigt. Figur 1 zeigt einen Flugzeugsitz 10a. Die Flugzeugsitzvorrichtung ist Teil des Flugzeugsitzes 10a. Der Flugzeugsitz 10a ist als Teil einer Flugzeugsitzreihe ausgebildet. Grundsätzlich ist es aber auch denkbar, dass der Flugzeugsitz 10a als ein Einzelsitz ausgebildet ist. Der Flugzeugsitz 10a umfasst eine Rückenlehne 12a. Die Rückenlehne 12a ist an einem nicht näher dargestellten Grundgestell des Flugzeugsitzes 10a angebunden. Die Rückenlehne 12a ist vorzugsweise schwenkbar zu dem Grundgestell ausgebildet. Grundsätzlich ist es aber auch denkbar, dass die Rückenlehne 12a schwenkbar zu dem Grundgestell ausgebildet ist. Die Rückenlehne 12a ist in einem unteren Bereich mit dem Grundgestell des Flugzeugsitzes gekoppelt. Der Flugzeugsitz 10a umfasst einen Tisch 14a. Der Tisch 14a ist an einer Rückseite der Rückenlehne 12a angeordnet. Der Tisch 14a ist zwischen einer Verstaustellung und einer Gebrauchsstellung verstellbar an der Rückenlehne 12a angebracht. Der Tisch 14a ist vorzugsweise schwenkbar an der Rückenlehne 12a angebunden. Der Tisch 14a ist in seiner Verstaustellung an die Rückenlehne angeklappt. In der Verstaustellung ist der Tisch 14a in einem Mittelbereich der Rückenlehne 12a an diese angeklappt. Der Tisch 14a ist für einen hinter dem Flugzeugsitz 10a sitzenden Passagier vorgesehen.

Der Flugzeugsitz 10a umfasst eine Funktionseinheit 16a. Die Funktionseinheit 16a ist in einem oberen Bereich 18a der Rückenlehne 12a angeordnet. Vorzugsweise ist der obere Bereich 18a von einem oberen Viertel der Rückenlehne 12a gebildet. Vorzugsweise ist der obere Bereich von den obersten 30 cm der Rückenlehne gebildet. Die Funktionseinheit 16a ist oberhalb des Tisches 14a angeordnet. Die Funktionseinheit 16a ist als eine Bildschirmeinheit ausgebildet. Die als Bildschirmeinheit ausgebildete Funktionseinheit 16a umfasst einen Bildschirm 20a. Der Bildschirm 20a ist vorzugsweise um eine Horizontal ausgerichtete Achse schwenkbar. Grundsätzlich ist es auch denkbar, dass der Bildschirm 20a der Funktionseinheit 16a positionsfest in der Rückenlehne 12a integriert ist. Die Funktionseinheit 14a weist eine Breite auf, die kleiner ist als eine Breite der Rückenlehne. Die Rückenlehne 12a weist seitlich jeweils einen Randbereich 22a, 24a auf. Ein oberer Randbereich 26a ist oberhalb der Funktionseinheit 14a angeordnet. Die Randbereiche 22a, 24a, 26a der Rückenlehne 12a umgeben die Funktionseinheit 14a seitlich und nach oben. Die Randbereiche 22a, 24a, 26a weisen vorzugsweise eine Breite von zumindest 2 cm auf. Grundsätzlich ist es auch denkbar, dass die Randbereiche 22a, 24a, 26a breiter ausgebildet sind. Die Randbereiche 22a, 24a sind frei von der Funktionseinheit 14a. Die Rückenlehne 12a weist eine Oberseite 28a auf. Die Oberseite 28a schließt die Rückenlehne 12a nach oben hin ab. Vorzugsweise ist die Oberseite 28a von einer im Wesentlichen ebenen Fläche gebildet. Grundsätzlich ist es auch denkbar, dass die Oberseite 28a eine Kontur aufweist. Der obere Randbereich 26a bildet vorzugsweise einen Übergang zu der Oberseite 28a der Rückenlehne 12a aus. Die seitlichen Randbereiche 22a, 24a bilden vorzugsweise jeweils einen Übergang zu seitlichen Seitenflächen der Rückenlehne 12a aus.

Die Flugzeugsitzvorrichtung umfasst eine Haltevorrichtung 30a. Die Haltevorrichtung 30a ist dazu vorgesehen, dass zumindest ein Gegenstand in dem oberen Bereich 18a der Rückenlehne 12a angeordnet werden kann. Mittels der Haltevorrichtung 30a ist vorzugsweise ein Gegenstand in dem oberen Bereich 18a der Rückenlehne 12a verliersicher anbringbar. Die Haltevorrichtung 30a ist vorzugsweise als ein PED-Halter ausgebildet. Die Haltevorrichtung 30a ist dazu ausgebildet, ein PED, beispielsweise also einen Tablet-Computer oder ein Smartphone, zu halten. Die Haltevorrichtung 30a ist vorzugsweise dazu vorgesehen, ein PED in einer benutzbaren Position zu halten. Die Haltevorrichtung 30a umfasst ein Halteelement 32a. Das Halteelement 32a ist als eine längliche Halteplatte ausgebildet. Das Halteelement 32a bildet einen Haltebereich 38a aus. Der Haltebereich 38a des Halteelements 32a ist dazu vorgesehen, dass ein Element, wie beispielsweise ein PED, darauf abgestellt, also gehalten werden kann. Das Halteelement 32a ist vorzugsweise als eine gekrümmte Halteplatte ausgebildet. Eine Innenseite des Halteelements 32a bildet den Haltebereich 28a aus. Das Halteelement 32a weist in dem Haltebereich 38a eine Halterippe 54a auf. Die Halterippe 54a ist als eine Erhöhung ausgebildet. Die Halterippe 54a ist mittig in einem vorderen Bereich des Halteelements 32a angeordnet. Grundsätzlich ist es auch denkbar, dass das Halteelement 32a mehrere zueinander beabstandet angeordnete Halterippen 54a aufweist. Grundsätzlich ist es ebenso denkbar, dass das Haltelement 32 einen oder mehrere Haltestifte aufweist. Das Halteelement 32a weist in seinem Haltebereich 38a eine rutschfeste Oberfläche auf. Die rutschfeste Oberfläche ist vorzugsweise durch eine Beschichtung oder eine Oberflächenbehandlung der Oberseite des Halteelements 32a gebildet. Das Haltelement 32a weist vorzugsweise eine Kontur der Rückenlehne 12a auf. Die Haltevorrichtung 30a umfasst einen ersten Haltearm 34a und einen zweiten Haltearm 36a. Die beiden Haltearme 34a, 36a sind dazu vorgesehen, den Haltebereich 32a an die Rückenlehne 12a anzubinden. Die Haltearme 34a, 36a sind an gegenüberliegenden Enden des Halteelements 32a angebunden. Die Haltearme 34a, 36a sind jeweils mit einem ersten Ende an dem Halteelement 34a, 36a angeordnet. Die Haltearme 34a, 36a sind an ihren zweiten Enden jeweils mit der Rückenlehne 12a gekoppelt. Die Haltearme 34a, 36a bilden zusammen mit dem Halteelement 32a ein U-förmiges Profil aus. Die Haltearme 34a, 36a und der Haltebereich 32a sind vorzugsweise einstückig miteinander ausgebildet. Grundsätzlich ist es auch denkbar, dass die Haltearme 34a, 36a in einem montierten Zustand über eine geeignete Kraft-, Form, und/oder Stoffschlussverbindung fest mit dem Haltebereich 32a ausgebildet sind.

Die Haltevorrichtung 30a ist verstellbar an der Rückenlehne 12a angeordnet. Die Haltevorrichtung 30a ist zwischen einer Verstaustellung und einer Gebrauchsstellung verstellbar an der Rückenlehne 12a angeordnet. Die Haltevorrichtung 30a ist vorzugsweise zwischen der Verstaustellung und der Gebrauchsstellung verschwenkbar. In der Gebrauchsstellung ist die Haltevorrichtung 30a mit ihrem Halteelement 32a von der Rückenlehne 12a, und zwar einer Rückseite der Rückenlehne, weg geschwenkt. In der Gebrauchsstellung ist das Halteelement 32a der Haltevorrichtung 30a von der Rückenlehne 12a beabstandet angeordnet. In der Gebrauchsposition ist das Halteelement 32a der Haltevorrichtung 30a im Bereich der Funktionseinheit 16a angeordnet. Dadurch kann ein Gegenstand, wie vorzugsweise ein Tablet-Computer oder ein Smartphone, in dem Bereich der Funktionseinheit 14a angeordnet werden. Dadurch kann eine gute Betrachtungsposition für einen Tablet-Computer oder ein Smartphone, das in der Haltevorrichtung 30a gehalten ist, erreicht werden. In der Verstaustellung ist die Haltevorrichtung 30a möglichst platzsparend an der Rückenlehne 12a angeordnet. In der Verstaustellung kann mittels der Haltevorrichtung 30a kein Gegenstand in einer vorgesehenen Weise an der Rückenlehne 12a gehalten werden. Die Haltevorrichtung 30a ist vorzugsweise dazu vorgesehen, in unterschiedlichen Gebrauchsstellungen arretiert zu werden. Unterschiedliche Gebrauchsstellungen sind durch unterschiedliche Winkelstellungen relativ zu der Rückenlehne 12a gekennzeichnet. Zur Arretierung der Haltevorrichtung in unterschiedlichen Gebrauchsstellungen weist die Haltevorrichtung vorzugsweise eine nicht näher dargestellte Arretiereinheit auf. Die Arretiereinheit kann vorzugsweise in die Lagerung der Haltevorrichtung 30a direkt integriert sein.

Zur beweglichen Anbindung an die Rückenlehne 12a weist die Haltevorrichtung eine Lagereinheit 40a auf. Mittels der Lagereinheit 40a ist die Haltevorrichtung 30a zwischen ihrer Verstaustellung und ihrer Gebrauchsstellung verstellbar, vorzugsweise verschwenkbar. Die Lagereinheit 40a lagert die Haltevorrichtung 30a über die Haltearme 34a, 36a schwenkbar. Die Lagereinheit 40a umfasst zwei Drehlager 42a, 44a. Je ein Drehlager 42a, 44a lagert einen der Haltearme 34a, 36a drehbar an der Rückenlehne 12a. Die Drehlager 42a, 44a sind jeweils an einem zweiten Ende der Haltearme 34a, 36a an die Haltearme 34a, 36a angebunden. Die Drehlager 42a, 44a sind an dem Halteelement 32a gegenüberliegenden Enden der Haltearme 34a, 36a angebunden. Die Drehlager 42a, 44a sind vorzugsweise in die Randbereiche 22a, 24a der Rückenlehne 12a, vorzugsweise in die Seitenwände der Rückenlehne 12a, integriert. Die Drehlager 42a, 44a sind vorzugsweise auf einer Höhe oberhalb einer Mitte der Funktionseinheit 14a angeordnet. Grundsätzlich ist es auch denkbar, dass die Drehlager 42a, 44a in einem Bereich unterhalb der Mitte der Funktionseinheit 14a oder sogar unterhalb der Funktionseinheit 14a angeordnet sind. Die Drehlager 42a, 44a bilden eine gemeinsame Drehachse aus, um die die Haltevorrichtung 30a verschwenkbar gelagert ist.

Die Haltevorrichtung 30a ist vorzugsweise in unterschiedlichen Gebrauchsstellungen arretierbar. Die Haltevorrichtung 30a weist zur Arretierung in verschiedenen Gebrauchsstellungen eine nicht näher dargestellte Arretiereinheit auf. Die Arretiereinheit kann beispielsweise in die Drehlager 42a, 44a integriert sein. Dadurch kann die Haltevorrichtung 30a vorteilhaft in unterschiedlichen Winkeln und Abständen zu der Rückenlehne 12a arretiert werden, um insbesondere vorteilhaft unterschiedlich große PEDs, wie insbesondere Tablet-Computer oder Smartphones, gut und in einer für einen Passagier vorteilhaften Ausrichtung in der Haltevorrichtung anbringen zu können.

Die Haltevorrichtung 30a ist zumindest im Wesentlichen oberhalb der integrierten Funktionseinheit 16a angeordnet. Die Haltevorrichtung 30a ist vorzugsweise in ihrer Verstaustellung oberhalb der Funktionseinheit 16a angeordnet. Vorzugsweise ist das Halteelement 32a der Haltevorrichtung 30a in dem Bereich oberhalb der Funktionseinheit 16a verstaut. Die Haltevorrichtung 30a ist in der Verstaustellung vorzugsweise zumindest teilweise in die Oberseite 28a der Rückenlehne 12a integriert. Das Haltelement 32a der Haltevorrichtung 30a ist in der Verstaustellung in dem Übergang zwischen dem oberen Randbereich 26a und der Oberseite 28a angeordnet. Durch die gekrümmte Form des Halteelements 32a erstreckt sich ein Teil des Halteelements 32a bis auf die Oberseite 28a der Rückenlehne 12a.

Die Rückenlehne 12a weist einen Aufnahmebereich 46a auf. In dem Aufnahmebereich 46a ist die Haltevorrichtung 30a in der Verstaustellung zumindest teilweise angeordnet. Die Haltevorrichtung 30a ist zumindest mit ihrem Halteelement 32a in dem Aufnahmebereich 46a angeordnet. Der Aufnahmebereich 46a ist als eine Vertiefung ausgebildet. Die Haltevorrichtung 30a ist mit dem Halteelement 32a in dem als Vertiefung ausgebildeten Aufnahmebereich 46a angeordnet. Vorzugsweise schließt eine Außenseite der Haltevorrichtung 30a insbesondere des Halteelements 32a eben mit einer Außenfläche der Rückenlehne 12a im Bereich des Aufnahmebereichs 46a ab. Grundsätzlich ist es auch denkbar, dass die Haltearme 34a, 36a der Haltevorrichtung 30a in der Verstaustellung zumindest teilweise ebenfalls in dem als Ausnehmung ausgebildeten Aufnahmebereich 46a angeordnet sind. Der Aufnahmebereich 46a ist vorzugsweise oberhalb der Lagereinheit 40a und deren Drehlagern 42a, 44a angeordnet. Die Haltevorrichtung 30a ist um die unterhalb des Aufnahmebereichs 46a angeordnete Drehachse schwenkbar zu der Rückenlehne 12a gelagert.

Die Haltevorrichtung 30a weist eine Verrastungseinheit 56a auf. Mittels der Verrastungseinheit 56a ist die Haltevorrichtung 30a in einer Verstaustellung an der Rückenlehne 12a fixierbar. Die Verrastungseinheit 56a weist ein nicht näher dargestelltes Verrastungsmittel auf, das für eine formschlüssige Verbindung zwischen der Haltevorrichtung 30a, vorzugsweise des Halteelements 32a der Haltevorrichtung 30a, und der Rückenlehne 12a vorgesehen ist. Das Verrastungsmittel kann beispielsweise als eine an die Rückenlehne 12a, insbesondere im Aufnahmebereich 46a der Rückenlehne 12a, angeformte Rastnase ausgebildet sein, die dazu vorgesehen ist, in der Verstaustellung in ein Gegenelement der Haltevorrichtung 30a formschlüssig einzurasten. Grundsätzlich ist es auch denkbar, dass die Verrastungseinheit 56a ein aktiv betätigbares Verriegelungselement aufweist, wie beispielsweise einen Hebel oder einen Riegel. Das aktiv betätigbare Verriegelungselement wäre dazu vorgesehen, von einem Passagier beispielsweise händisch zwischen einer Verriegelstellung und einer Entriegelstellung verstellt zu werden.

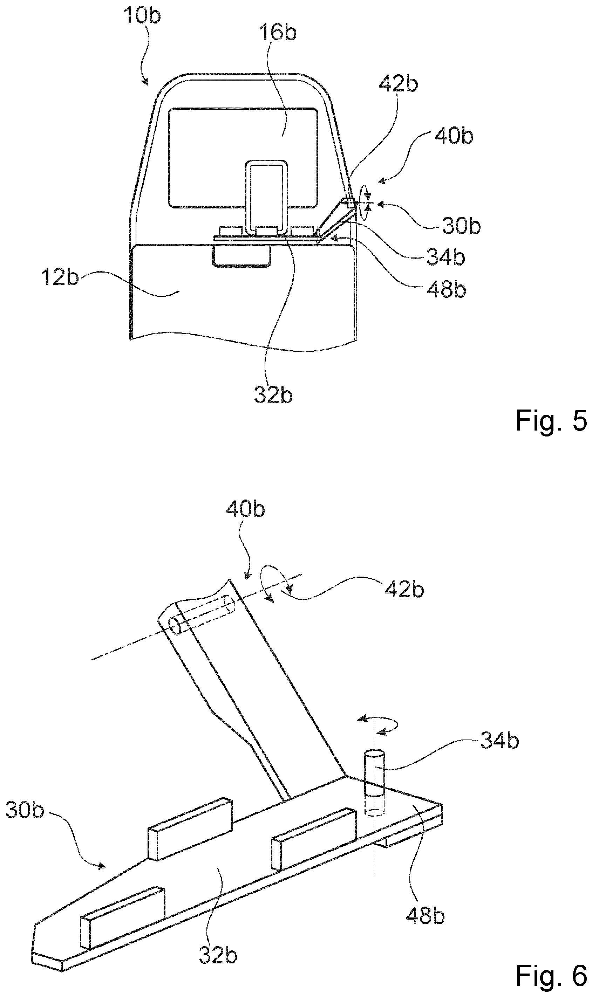

In Fig. 5 bis 9 sind drei weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Fig. 5 bis 9 ist der Buchstabe a durch die Buchstaben b bis d ersetzt.

In den Figuren 5 und 6 ist ein zweites Ausführungsbeispiel der Flugzeugsitzvorrichtung gezeigt. Figur 5 zeigt einen Flugzeugsitz 10b. Der Flugzeugsitz 10b umfasst eine Rückenlehne 12b. Der Flugzeugsitz 10b umfasst eine Funktionseinheit 16b. Die Funktionseinheit 16b ist in einem oberen Bereich 18b der Rückenlehne 12b angeordnet. Die Flugzeugsitzvorrichtung umfasst eine Haltevorrichtung 30b. Die Haltevorrichtung 30b ist dazu vorgesehen, dass zumindest einen Gegenstand in einem oberen Bereich 18b der Rückenlehne 12b angeordnet werden kann. Mittels der Haltevorrichtung 30b ist vorzugsweise ein Gegenstand in dem oberen Bereich 18b der Rückenlehne 12b verliersicher anbringbar. Die Haltevorrichtung 30b umfasst ein Halteelement 32b. Das Halteelement 32b ist als eine längliche Halteplatte ausgebildet. Das Halteelement 32b bildet einen Haltebereich 38b aus. Die Haltevorrichtung 30b umfasst lediglich einen Haltearm 34b. Die Haltevorrichtung 30b, also das Halteelement 32b, ist nur über den einen Haltearm 34b an der Rückenlehne 12b gelagert. Die Haltevorrichtung 30b ist verstellbar an der Rückenlehne 12b angeordnet. Die Haltevorrichtung 30b ist zwischen einer Verstaustellung und einer Gebrauchsstellung verstellbar an der Rückenlehne 12b angeordnet. Zur beweglichen Anbindung an die Rückenlehne 12b weist die Haltevorrichtung 30b eine Lagereinheit 40b auf. Die Lagereinheit 40b weist ein erstes Drehlager 42b auf. Über das Drehlager 42b ist der einzige Haltearm 34b schwenkbar an der Rückenlehne 12b angeordnet. Das Drehlager 42b ist in einem Randbereich 22b der Rückenlehne neben der Funktionseinheit 16b angeordnet. Die Lagereinheit 40b weist ein zweites Drehlager 48b auf, über das das Halteelement 32b drehbar zu dem Haltearm 34b gelagert ist. Über das zweite Drehlager48b ist eine Verstellung des Halteelements 32b relativ zu dem Haltearm 34b möglich. Grundsätzlich wäre es auch denkbar, dass zwischen dem einem Haltearm 34b und dem Halteelement 32b ein Linearlager oder ein Teleskoplager angeordnet ist, durch das das Halteelement 32b zu dem Haltearm 34b zusätzlich linear verstellbar ist. So kann eine zusätzliche Einstellbarkeit der Haltevorrichtung 30b erreicht werden.

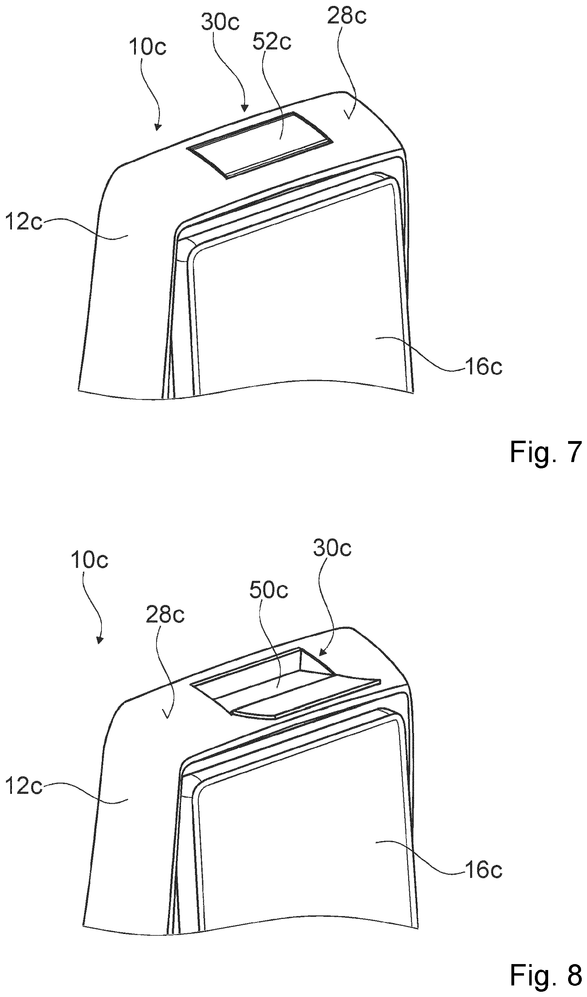

In den Figuren 7 und 8 ist ein nicht erfindungsgemäßes drittes Ausführungsbeispiel der Flugzeugsitzvorrichtung gezeigt. Figur 7 zeigt einen Flugzeugsitz 10c. Der Flugzeugsitz 10c umfasst eine Rückenlehne 12c. Der Flugzeugsitz 10c umfasst eine Funktionseinheit 16c. Die Funktionseinheit 16c ist in einem oberen Bereich 18c der Rückenlehne 12c angeordnet. Die Rückenlehne 12c weist eine Oberseite 28c auf. Die Oberseite 28c schließt die Rückenlehne 12c nach oben hin ab. Vorzugsweise ist die Oberseite 28c von einer im Wesentlichen ebenen Fläche gebildet. Grundsätzlich ist es auch denkbar, dass die Oberseite 28c eine Kontur aufweist.

Die Flugzeugsitzvorrichtung umfasst eine Haltevorrichtung 30c. Die Haltevorrichtung 30c ist in die Oberseite 28c der Rückenlehne 12c integriert. Die Haltevorrichtung 30c als ein in die Oberseite 28c der Rückenlehne 12c integriertes Staufach ausgebildet. Die Haltevorrichtung 30c umfasst eine Vertiefung 50c. Die Vertiefung 50c bildet einen Hohlraum, der zur Verstauung von Utensilien vorgesehen ist. Die Vertiefung 50c weist vorzugsweise eine Breite auf, die größer ist als die Hälfte einer Breite der Rückenlehne 12c. Die Vertiefung 50c weist vorzugsweise eine Tiefe von zumindest 5 cm auf. Vorzugsweise weist die Vertiefung einen ebenen Boden auf. Grundsätzlich ist es auch denkbar, dass die Vertiefung einen schräg verlaufenden Boden ausbildet. Die Haltevorrichtung 30c umfasst ein Abdeckelement 52c. Mittels des Abdeckelements 52c ist die Haltevorrichtung 30c, also die Vertiefung 50c, verschließbar. Das Abdeckelement 52c ist als eine verschwenkbare Klappe ausgebildet. Grundsätzlich ist es auch denkbar, dass das Abdeckelement 52c als eine linear verschiebbare Klappe ausgebildet ist. Dabei ist es vorzugsweise auch denkbar, dass das Abdeckelement 52c als eine in verschiedene Richtungen verschiebbare Klappe ausgebildet ist.

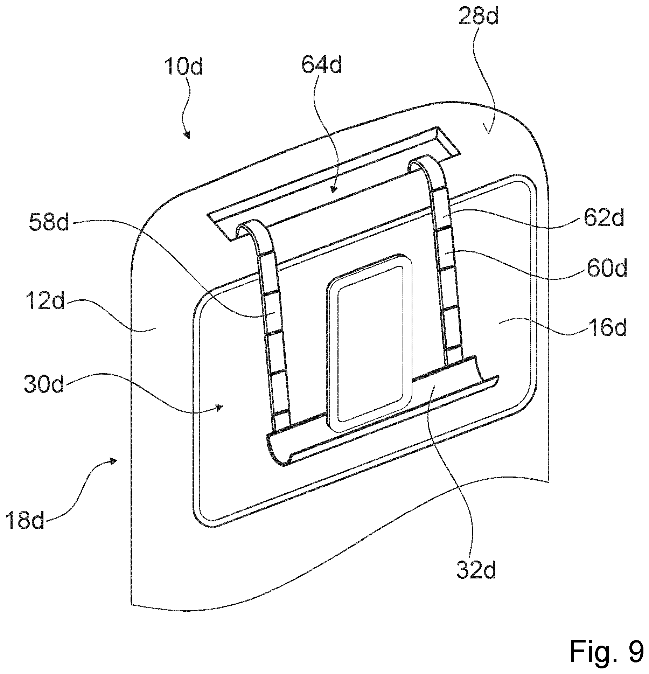

Die Figur 9 zeigt ein viertes Ausführungsbeispiel der Flugzeugsitzvorrichtung. Figur 9 zeigt einen Flugzeugsitz 10d. Der Flugzeugsitz 10d umfasst eine Rückenlehne 12d. Der Flugzeugsitz 10d umfasst eine Funktionseinheit 16d. Die Funktionseinheit 16d ist in einem oberen Bereich 18d der Rückenlehne 12d angeordnet. Die Rückenlehne 12d weist eine Oberseite 28d auf. Die Oberseite 28d schließt die Rückenlehne 12d nach oben hin ab. Vorzugsweise ist die Oberseite 28d von einer im Wesentlichen ebenen Fläche gebildet. Grundsätzlich ist es auch denkbar, dass die Oberseite 28d eine Kontur aufweist.

Die Flugzeugsitzvorrichtung umfasst eine Haltevorrichtung 30d. Die Haltevorrichtung 30d ist in die Oberseite 28d der Rückenlehne 12d integriert. Die Haltevorrichtung 30d ist dazu vorgesehen, dass zumindest ein Gegenstand in dem oberen Bereich 18d der Rückenlehne 12d angeordnet werden kann. Mittels der Haltevorrichtung 30d ist vorzugsweise ein Gegenstand in dem oberen Bereich 18a der Rückenlehne 12d verliersicher anbringbar. Die Haltevorrichtung 30a ist vorzugsweise als ein PED-Halter ausgebildet. Die Haltevorrichtung 30d kann zwischen einer Verstaustellung und zumindest einer Gebrauchsstellung verstellt werden. Die Flugzeugsitzvorrichtung umfasst ein Verstaufach 64d. Das Verstaufach 64d ist zur Verstauung der Haltevorrichtung 30d vorgesehen. Das Verstaufach 64d ist als ein Hohlraum in der Rückenlehne 12d ausgebildet. Das als Hohlraum ausgebildete Verstaufach 64d weist eine Öffnung auf, die auf der Oberseite 28d der Rückenlehne 12d angeordnet ist. In der Verstaustellung ist die Haltevorrichtung 30d zumindest im Wesentlichen in dem Verstaufach 64d angeordnet, also verstaut.

Die Haltevorrichtung 30d umfasst ein Halteelement 32d. Das Halteelement 32d ist als eine längliche Halteplatte ausgebildet. Das Halteelement 32d bildet einen Haltebereich 38d aus. Der Haltebereich 38d des Halteelements 32d ist dazu vorgesehen, dass ein Element, wie beispielsweise ein PED, darauf abgestellt, also gehalten werden kann. Das Halteelement 32d ist vorzugsweise als eine gekrümmte Halteplatte ausgebildet. Die Haltevorrichtung 30d umfasst zwei Anbindungselemente 58d, 60d. Die Anbindungselemente 58d, 60d sind dazu vorgesehen, das Halteelement 32d an die Rückenlehne 12d anzubinden. Die Anbindungselemente 58d, 60d sind als längliche, aufrollbare Elemente ausgebildet. Die Anbindungselemente 58d, 60d sind als Ketten aus einzelnen, beweglich miteinander verbundenen Kettengliedern 62d ausgebildet. Grundsätzlich wäre es auch denkbar, dass die Anbindungselemente 58d, 60d als andere längliche und aufrollbare Elemente ausgebildet sind, wie beispielsweise ein Draht oder eine Schnur. Grundsätzlich wäre es auch denkbar, dass die Anbindungselemente 58d, 60d jeweils aus einem steifen Haltearm und einem flexiblen Element, wie beispielsweise einem Band oder einem Draht, ausgebildet sind. Die steifen Haltearme wären dabei insbesondere als die Bereiche ausgebildet, die in einer Gebrauchsstellung aus dem Verstaufach 64d herausbewegt sind und die mit dem Halteelement 32d der Haltevorrichtung 30d direkt gekoppelt sind. Die flexiblen Elemente wären dabei im Inneren der Rückenlehne 12d, also in dem Verstaufach 64d, angeordnet, vorzugsweise auch in der Gebrauchsstellung. Die Anbindungselemente 58d, 60d sind mit ihren ersten Enden jeweils in einem Außenbereich des Halteelements 32d der Haltevorrichtung 30d angebunden. Mit einem zweiten Ende sind die Anbindungselemente 58d, 60d jeweils mit einem Aufrollmechanismus verbunden. Der Aufrollmechanismus ist in dem in der Oberseite 28d der Rückenlehne 12d eingebrachten Verstaufach 64d angeordnet. Der Aufrollmechanismus ist dazu vorgesehen, die Anbindungselemente 58d, 60d darauf aufzurollen. Der Aufrollmechanismus weist dazu nicht näher dargestellte Aufrollelemente auf. Die Aufrollelemente sind vorzugsweise stufenlos arretierbar, dadurch können die Anbindungselemente 58d, 60d in unterschiedlich weit herausgezogenen Längen arretiert werden. Dadurch kann das an den Anbindungselementen 58d, 60d befestigte Halteelement 32d der Haltevorrichtung 30d in unterschiedlichen Höhen an einer Rückseite der Rückenlehne 12d fixiert werden. In der Verstaustellung verschließt das Halteelement 32d der Haltevorrichtung 30d vorzugsweise das Verstaufach 64d. Grundsätzlich ist es auch denkbar, dass zum Verschließen des Verstaufachs 64d eine eigene Klappe vorgesehen ist. Dann wäre das Halteelement 32d in der Verstaustellung vorzugsweise komplett in dem Verstaufach 64d angeordnet.

Zur Verstellung der Haltevorrichtung 30d in eine Gebrauchsstellung kann von einem Bediener das Halteelement 32d der Haltevorrichtung 30d aus der Verstaustellung herausgezogen werden. Bei einer Verstellung von der Verstaustellung in die Gebrauchsstellung werden die Anbindungselemente 58d, 60d von dem Aufrollmechanismus abgerollt. Das Halteelement 32d kann durch Herausziehen in einen Bereich vor die Funktionseinheit 16d gebracht werden. Das Halteelement 32d hängt dabei an den Anbindungselementen 58d, 60d. Ein PED kann in der Gebrauchsstellung in dem Halteelement 32d aufgestellt und an der Rückenlehne 12d oder der Funktionseinheit 16d angelehnt werden.

Grundsätzlich ist es auch denkbar, dass die Haltevorrichtung 30d anstatt des Aufrollmechanismus eine Linearlagervorrichtung aufweist, an der die Anbindungselemente 58d, 60d angebunden sind. Die Linearlagervorrichtung würde zumindest ein, vorzugsweise zwei im Inneren der Rückenlehne 12d, also im Inneren des Verstaufachs 64d, angeordnete Linearlager umfassen. An dem Linearlager wäre jeweils zumindest eines der Anbindungselemente 58d, 60d mit ihrem zweiten Ende fest angebunden. Bei einem Herausziehen des Halteelements 32d aus der Verstaustellung würden die Anbindungselemente 58d, 60d das zumindest eine Linearlager linear verschieben. Vorzugsweise ist es dabei denkbar, dass die Linearlagervorrichtung ein Gegengewicht aufweist, das bei einer Verstellung in die Gebrauchsstellung angehoben wird. Das Gegengewicht ist insbesondere dazu vorgesehen, dass das zumindest eine Linearlager bei einer Bewegung des Halteelements 32d in die Verstaustellung ebenfalls selbsttätig in seine Verstaustellung zurück verstellt wird.

### Bezugszeichen

- 10: Flugzeugsitz
- 12: Rückenlehne
- 14: Tisch
- 16: Funktionseinheit
- 18: Oberer Bereich
- 20: Bildschirm
- 22: Randbereich
- 24: Randbereich
- 26: Randbereich
- 28: Oberseite
- 30: Haltevorrichtung
- 32: Halteelement
- 34: Haltearm
- 36: Haltearm
- 38: Haltebereich
- 40: Lagereinheit
- 42: Drehlager
- 44: Drehlager
- 46: Aufnahmebereich
- 48: Drehlager
- 50: Vertiefung
- 52: Abdeckelement
- 54: Halterippe
- 56: Verrastungseinheit
- 58: Anbindungselement
- 60: Anbindungselement
- 62: Kettenglied
- 64: Verstaufach

## Patentansprüche

1. Flugzeugsitzvorrichtung mit einer Rückenlehne (12a; 12b; 12c; 12d) und mit einer in einen oberen Bereich (18a; 18b; 18c; 18d) der Rückenlehne (12a; 12b; 12c; 12d) integrierten Funktionseinheit (16a; 1b; 16c; 16d), wie insbesondere eine Bildschirmeinheit oder eine Literaturtasche, wobei der obere Bereich (18a; 18b; 18c; 18d) von einem oberen Viertel der Rückenlehne (12a; 12b; 12c; 12d) gebildet ist, und mit einer Haltevorrichtung (30a; 30b; 30c; 30d), die dazu vorgesehen ist, dass zumindest ein Gegenstand in dem oberen Bereich (18a; 18b; 18c; 18d) der Rückenlehne (12a; 12b; 12c; 12d) angeordnet werden kann, und dazu ein Halteelement (32a; 32b; 32d) aufweist, wobei die Haltevorrichtung (30a; 30b; 30c; 30d) als ein PED-Halter ausgebildet ist, **dadurch gekennzeichnet, dass** das Halteelement (32a; 32b; 32d) der Haltevorrichtung (30a; 30b; 30c; 30d) in der Verstaustellung in dem Bereich oberhalb der integrierten Funktionseinheit (16a; 1b; 16c; 16d) verstaut angeordnet ist.

2. Flugzeugsitzvorrichtung nach Anspruch 1, **dadurch gekennzeichnet, dass** die Haltevorrichtung (30a) zumindest teilweise in dem oberen Bereich (18a) zwischen der Funktionseinheit (16a) und einer oberen Kante der Rückenlehne (12a) integriert ist.

3. Flugzeugsitzvorrichtung nach Anspruch 1 oder 2, **dadurch gekennzeichnet, dass** die Haltevorrichtung (30a; 30c; 30d) zumindest teilweise in eine Oberseite (28a; 28c; 28d) der Rückenlehne (12a; 12c; 12d) integriert ist.

4. Flugzeugsitzvorrichtung nach einem der vorhergehenden Ansprüche, **dadurch gekennzeichnet, dass** die Funktionseinheit (16a; 16c; 16d) als eine Bildschirmeinheit ausgebildet ist.

5. Flugzeugsitzvorrichtung nach einem der vorhergehenden Ansprüche, **dadurch gekennzeichnet, dass** die Rückenlehne (12a) einen Aufnahmebereich (46a) aufweist, in dem die Haltevorrichtung (30a) in der Verstaustellung zumindest teilweise angeordnet ist.

6. Flugzeugsitzvorrichtung nach Anspruch 5, **dadurch gekennzeichnet, dass** der Aufnahmebereich (46a) als eine Vertiefung ausgebildet ist, in der die Haltevorrichtung (30a) in der Verstaustellung eingelassen ist und insbesondere eben mit einer Außenfläche der Rückenlehne (12a) abschließt.

7. Flugzeugsitzvorrichtung nach einem der vorhergehenden Ansprüche, **dadurch gekennzeichnet, dass** die Haltevorrichtung (30a) um eine unterhalb des Aufnahmebereichs (46) angeordnete Drehachse schwenkbar an der Rückenlehne (12a) gelagert ist.

8. Flugzeugsitzvorrichtung nach einem der vorhergehenden Ansprüche, **dadurch gekennzeichnet, dass** die Haltevorrichtung (30a; 30b) zumindest einen Haltearm (34a, 36a; 34b) ausbildet, über den die Haltevorrichtung (30a; 30b) mit der Rückenlehne (12a; 12b) gekoppelt ist.

9. Flugzeugsitzvorrichtung nach einem der vorhergehenden Ansprüche, **dadurch gekennzeichnet, dass** die Haltevorrichtung (30a) eine Verrastungseinheit (56a) aufweist, mittels der die Haltevorrichtung (30a) in einer Verstaustellung an der Rückenlehne (12a) fixierbar ist.

10. Flugzeugsitzvorrichtung nach einem der vorhergehenden Ansprüche, **dadurch gekennzeichnet, dass** die Haltevorrichtung (30a) zur Lagerung an der Rückenlehne (12a; 12b) zumindest ein Drehlager (42a; 44a; 42b, 48b), ein Linearlager und/oder ein Teleskoplager umfasst.

11. Flugzeugsitzvorrichtung nach einem der vorhergehenden Ansprüche, **dadurch gekennzeichnet, dass** die Haltevorrichtung (30a; 30b; 30d) dazu vorgesehen ist, in unterschiedlichen Gebrauchsstellungen arretiert zu werden.

12. Flugzeugsitz mit einer Flugzeugsitzvorrichtung nach einem der Ansprüche 1 bis 11.

## Claims

1. An aircraft seat device with a backrest (12a; 12b; 12c; 12d) and with a functional unit (16a; 16b; 16c; 16d) integrated in an upper region (18a; 18b; 18c; 18d) of the backrest (12a; 12b; 12c; 12d), such as in particular a screen unit or a literature pocket, wherein the upper region (18a; 18b; 18c; 18d) is formed by an upper quarter of the backrest (12a; 12b; 12c; 12d), and with a holding device (30a; 30b; 30c; 30d) which is configured for the purpose that at least one object can be arranged in the upper region (18a; 18b; 18c; 18d) of the backrest (12a; 12b; 12c; 12d), and for this purpose has a holding element (32a; 32b; 32d), wherein the holding device (30a; 30b; 30c; 30d) is implemented as a PED holder, **characterized in that** the holding element (32a; 32b; 32d) of the holding device (30a; 30b; 30c; 30d) is arranged stowed in the region above the integrated functional unit (16a; 16b; 16c; 16d) in the stowed position.

2. The aircraft seat device according to claim 1, **characterized in that** the holding device (30a) is integrated at least partially in the upper region (18a) between the functional unit (16a) and an upper edge of the backrest (12a).

3. The aircraft seat device according to claim 1 or 2, **characterized in that** the holding device (30a; 30c; 30d) is integrated at least partially in an upper side (28a; 28c; 28d) of the backrest (12a; 12c; 12d).

4. The aircraft seat device according to any one of the preceding claims, **characterized in that** the functional unit (16a; 16c; 16d) is implemented as a screen unit.

5. The aircraft seat device according to any one of the preceding claims, **characterized in that** the backrest (12a) has a receiving region (46a) in which the holding device (30a) is arranged at least partially in the stowed position.

6. The aircraft seat device according to claim 5, **characterized in that** the receiving region (46a) is implemented as a recess in which the holding device (30a) is recessed in the stowed position and in particular terminates flush with an outer surface of the backrest (12a).

7. The aircraft seat device according to any one of the preceding claims, **characterized in that** the holding device (30a) is supported on the backrest (12a) so as to be pivotable about an axis of rotation arranged below the receiving region (46).

8. The aircraft seat device according to any one of the preceding claims, **characterized in that** the holding device (30a; 30b) forms at least one holding arm (34a, 36a; 34b) via which the holding device (30a; 30b) is coupled to the backrest (12a; 12b).

9. The aircraft seat device according to any one of the preceding claims, **characterized in that** the holding device (30a) has a latching unit (56a) by means of which the holding device (30a) can be fixed to the backrest (12a) in a stowed position.

10. The aircraft seat device according to any one of the preceding claims, **characterized in that** the holding device (30a) comprises at least one rotary bearing (42a; 44a; 42b, 48b), a linear bearing and/or a telescopic bearing for support on the backrest (12a; 12b).

11. The aircraft seat device according to any one of the preceding claims, **characterized in that** the holding device (30a; 30b; 30d) is configured to be locked in different positions of use.

12. An aircraft seat comprising an aircraft seat device according to any one of claims 1 to 11.

## Revendications

1. Dispositif de siège d'avion avec un dossier (12a; 12b; 12c; 12d) et avec une unité fonctionnelle (16a; 1b; 16c; 16d) intégrée dans une zone supérieure (18a; 18b; 18c; 18d) du dossier (12a; 12b; 12c; 12d), comme en particulier une unité d'écran ou une pochette de documentation, la zone supérieure (18a; 18b; 18c; 18d) étant formée par un quart supérieur du dossier (12a; 12b; 12c; 12d), et avec un dispositif de retenue (30a; 30b; 30c; 30d) qui est prévu pour qu'au moins un objet puisse être disposé dans la zone supérieure (18a; 18b; 18c; 18d) du dossier (12a; 12b; 12c; 12d), et présente à cet effet un élément de retenue (32a; 32b; 32d), le dispositif de retenue (30a; 30b; 30c; 30d) étant réalisé sous forme de support PED, **caractérisé en ce que** l'élément de retenue (32a; 32b; 32d) du dispositif de retenue (30a; 30b; 30c; 30d) est disposé, dans la position rangée, rangé dans la zone au-dessus de l'unité fonctionnelle intégrée (16a; 1b; 16c; 16d).

2. Dispositif de siège d'avion selon la revendication 1, **caractérisé en ce que** le dispositif de retenue (30a) est intégré au moins en partie dans la zone supérieure (18a) entre l'unité fonctionnelle (16a) et un bord supérieur du dossier (12a).

3. Dispositif de siège d'avion selon la revendication 1 ou 2, **caractérisé en ce que** le dispositif de retenue (30a; 30c; 30d) est intégré au moins en partie dans un côté supérieur (28a; 28c; 28d) du dossier (12a; 12c; 12d).

4. Dispositif de siège d'avion selon l'une quelconque des revendications précédentes, **caractérisé en ce que** l'unité fonctionnelle (16a; 16c; 16d) est réalisée sous forme d'unité d'écran.

5. Dispositif de siège d'avion selon l'une quelconque des revendications précédentes, **caractérisé en ce que** le dossier (12a) présente une zone de réception (46a) dans laquelle le dispositif de retenue (30a) est disposé au moins en partie dans la position rangée.

6. Dispositif de siège d'avion selon la revendication 5, **caractérisé en ce que** la zone de réception (46a) est réalisée sous forme de renfoncement dans lequel le dispositif de retenue (30a) est encastré dans la position rangée et se termine en particulier de manière plane avec une surface extérieure du dossier (12a).

7. Dispositif de siège d'avion selon l'une quelconque des revendications précédentes, **caractérisé en ce que** le dispositif de retenue (30a) est supporté sur le dossier (12a) de manière à pouvoir pivoter autour d'un axe de rotation disposé en dessous de la zone de réception (46).

8. Dispositif de siège d'avion selon l'une quelconque des revendications précédentes, **caractérisé en ce que** le dispositif de retenue (30a; 30b) réalise au moins un bras de retenue (34a, 36a; 34b) par le biais duquel le dispositif de retenue (30a; 30b) est couplé au dossier (12a; 12b).

9. Dispositif de siège d'avion selon l'une quelconque des revendications précédentes, **caractérisé en ce que** le dispositif de retenue (30a) présente une unité d'encliquetage (56a) au moyen de laquelle le dispositif de retenue (30a) peut être fixé dans une position rangée sur le dossier (12a).

10. Dispositif de siège d'avion selon l'une quelconque des revendications précédentes, **caractérisé en ce que** le dispositif de retenue (30a) comprend, pour le support sur le dossier (12a; 12b), au moins un palier rotatif (42a; 44a; 42b, 48b), un palier linéaire et/ou un palier télescopique.

11. Dispositif de siège d'avion selon l'une quelconque des revendications précédentes, **caractérisé en ce que** le dispositif de retenue (30a; 30b; 30d) est prévu pour être bloqué dans différentes positions d'utilisation.

12. Siège d'avion comprenant un dispositif de siège d'avion selon l'une quelconque des revendications 1 à 11.
